# EUROPEAN PATENT APPLICATION

(11) **EP 3 031 670 A1**
(43) Date of publication of application: **15.06.2016**
(21) Application number: 15198618.9
(22) Date of filing: 09.12.2015
(51) Int. Cl.: B60R 13/02

(54) **TRIM ELEMENT FOR A VEHICLE**

(30) Priority: 11.12.2014 GB 201422013
(71) Applicant: Nissan Motor Manufacturing (UK) Ltd., Cranfield Bedfordshire MK43 0DB (GB)
(72) Inventor: PICKETT, Kevin, Bedfordshire, MK43 0DB (GB); TEARLE, Glenn, Bedfordshire, MK43 0DB (GB)

(57) **Abstract**

A trim element (2) for a vehicle comprises a moulded panel (4) having inner (6) and outer (8) sides; at least one integral support member (18) connected to the panel (4) and configured to pivot around the panel, optionally by a live hinge; said support member (18) being pivotable from a first position as moulded to a second position where it covers a portion of the panel inner side (6); and at least one trim clip (42) on the support member (18) for attaching the panel to the vehicle structure. The support member may be clipped or heat staked in its second position. At least one trim clip (42) may be provided elsewhere on the inner side (6) of the panel for attaching it to the vehicle.

## Description

The present invention relates to a trim element for a vehicle. The invention also relates to a vehicle including the trim element; and to a method of installing a trim element on a vehicle. The invention is particularly, but not exclusively, applicable to motor cars.

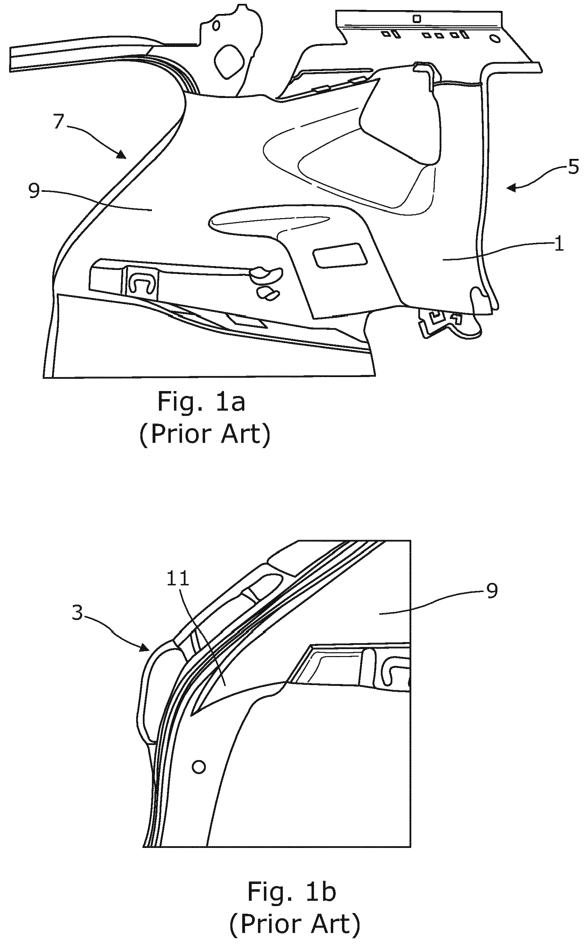

Figures 1a and 1b show a trim element 1 for a vehicle 3 which is mounted onto the "C" and "D" pillars 5, 7. The purpose of the trim element 1 is to hide parts of the vehicle structure that are not pleasing to the eye, and any components mounted in the vicinity of that part of the structure, such as electrical cables. The trim element 1 has an inner side (not shown) having a plurality of trim clips (not shown) distributed over its surface for attaching the trim element 1 to the vehicle 3. The trim element also has an outer side 9 which provides an aesthetically pleasing surface to the user of the vehicle. In this context, the inner side (or hidden or "B" surface) faces the vehicle body panels; while the outer side or "A" surface faces the vehicle interior, and is therefore visible.

Thus the trim element 1 improves the quality, look and feel of the vehicle, as presented to a user of the vehicle.

Figure 1b illustrates a problem that can occur with this type of trim element. It has been found that, when the temperature rises in the vehicle, for example on a sunny day, the lower rear corner 11 of the trim element can distort by bending outwards away from the vehicle structure. This is unsightly, and not acceptable to the user of the vehicle. It has also been found that the user may accidently catch the lower rear corner 11 with, for example, a shopping bag when loading the boot (trunk), which can exacerbate the distortion. In extreme cases, the lower rear corner 11 can be forced to an orientation wherein it protrudes substantially perpendicularly from the vehicle structure.

One of the causes of this problem is that there is no trim clip located on the inner side of the trim element towards the lower rear corner 11.

In order to address this problem, it was realised that some additional fixing means is required in the vicinity of the lower rear corner 11. However, upon investigating this matter, the inventors determined that it is not possible to simply adapt the existing tool used to manufacture the trim element 1 to include a new trim clip, or a mounting formation for a trim clip, in the vicinity of the lower rear corner. This is because the existing tool does not have sufficient depth in the vicinity of the lower rear corner 11 to accommodate a new clip mounting formation. It was also found that manufacturing an entirely new tool to produce the modified trim element is undesirable because of the high cost.

Similar problems can occur with other vehicle trim elements, for example other vehicle trim elements in a passenger cabin, such as those located on or adjacent to door sills, on doors or in the vicinity of the dashboard. Similar problems can occur with exterior trim elements, such as those located in the vicinity of a bumper.

The problems identified are particularly applicable to motor cars, however similar problems can occur with trim elements on other vehicles, such as vans, lorries, and/or rail vehicles.

Accordingly, the present invention seeks to provide a trim element that mitigates at least one of the aforesaid problems, or at least provides an alternative to known trim elements; a vehicle including the trim element; and a method for mounting the trim element in a vehicle.

According to one aspect of the invention there is provided a trim element for a vehicle, the trim element comprising: a moulded panel having an inner side, which is typically hidden from view when the panel is located *in*-*situ*, and an outer side, which is typically visible in normal usage when the panel is located *in*-*situ*; at least one integral support member connected to the panel and configured for pivoting movement with respect to the panel, said integral support member being pivotable from a first position as moulded to a second position where it covers a portion of the inner side of the panel; and at least one trim clip on the integral support member for attaching the trim element to the vehicle structure.

The invention provides an additional fixing means to the trim element, which is not visible during normal use; and which overcomes the distortion problem. It also enables the trim element to be manufactured using the existing tool, albeit in modified form. This is because, while there is insufficient depth in the required area of the existing tool to accommodate a new trim clip, or a mounting formation for a trim clip, there is sufficient space in a peripheral portion of the tool to accommodate an integral support member, which is pivotally attached to the panel.

Accordingly, it is not necessary to provide an entirely new tool to produce the modified trim element, for at least some arrangements of the trim element.

While the invention was conceived as a work around to a problem occurring in a specific context, it has been determined by the inventors that the invention is useful in other contexts. In particular, the technique can be used to modify the design of future tools for trim elements to reduce the depth required, and hence material and machining costs. Also, the technique can be applied to any vehicle trim element, not just those positioned over the C and D pillars.

Advantageous features of preferred embodiments are described in the dependent claims, and in the statements of invention below.

The trim clips releasably attach the trim element to the vehicle structure, so that the trim element can be removed, for example for maintenance purposes.

Advantageously, the trim clip is releasably attachable to the integral support member. Since the trim clip is not integral to the integral support member, a more shallow depth tool can be used to manufacture the trim element.

The integral support member may include at least one trim clip mounting formation. The mounting formation may include a receiving formation therein, so that the trim clip is mounted in the receiving formation. The receiving formation may include a slot that is open at one side, so that the trim clip is insertable and/or removable from the mounting via the open side of the slot.

Advantageously, the trim element includes at least one additional trim clip, wherein the trim clip is releasably attachable to the panel. This extends the useful life of the trim element. For example, if a trim clip is damaged, the trim clip can be replaced and the trim element can be reused. The cost of replacing a damaged trim clip is significantly lower than the cost of replacing an entire trim element. This arrangement also allows the trim clips and panels to be made from different materials.

The trim element may include at least one trim clip mounting formation on the inner side of the panel, said trim clip mounting formation being arranged to receive a trim clip which is used to attach the trim element to the vehicle structure. Such a trim clip mounting formation may be additional to a trim clip mounting formation on the integral support member. The trim clip mounting formation on the panel may include a receiving formation therein, in which case a trim clip is mountable in the receiving formation. The receiving formation may include a slot that is open at one side so that the trim clip is insertable and/or removable from the mounting via the open side of the slot.

Advantageously, the trim element includes a locking element arranged to retain the integral support member in the second position. In preferred embodiments the locking element is located on the inner side of the panel, and preferably is an integral moulded part of the panel. The locking element may protrude outwardly from an inner surface of the panel. (that is, away from the vehicle interior; and towards the vehicle body panels)

In some embodiments, the locking element is arranged to releasably engage the integral support member. The locking element may releasably engage a locking formation. Advantageously, the locking element is in the form of a latch. In preferred embodiments the latch is resilient. This allows the integral support member to be snapped easily and positively into the second position. Preferably, the locking formation is an edge portion of the support member.

In some embodiments, the locking element permanently fixes the integral support member in the second position. For example, the locking element can comprise a member that protrudes from the inner side of the panel and the integral support member is fixed in the second position by a heat treatment of the locking element, such as by heat staking the locking element, thereby forming a head which retains the integral support member in the second position.

Advantageously, the trim element includes at least one support formation, such as at least one lug, provided on the inner side of the panel, wherein the or each support formation is arranged to support a trim clip mounted on the integral support member when the support member is in the second position.

Advantageously, at least one of the support formations comprises an integral moulded part of the panel.

Advantageously, at least one of the trim clips includes a first flange arranged to engage a first surface of the integral support member, and a second flange arranged to engage a second surface of the integral support member. The first surface is arranged substantially opposite to the second surface. A stem connects the second flange to the first flange. The stem is inserted into the slot formed in the trim clip mounting. There is a tight fit between the stem and the slot, which retains the clip in place. In preferred embodiments, at least some, and preferably each of the trim clips is arranged in this manner.

In some embodiments, the trim clip mounting can include at least one formation, such as a protrusion, that is arranged to retain the clip within the slot.

The or each trim clip support is located on the inner side of the panel such that when the integral support member is in the second position, the or each clip support is arranged to engage the second flange. This prevents the integral support member from flexing too much when the trim clip is inserted into a hole formed in the vehicle structure.

Advantageously, the integral support member is pivotally connected to the trim panel by a live hinge. The support member is hinged to a peripheral portion, such as an edge or side wall, of the trim panel, and preferably towards one corner of the trim panel. In preferred embodiments, the hinge is located towards a lower edge when the element is located *in-situ.* This tends to hide the hinge.

In some embodiments, a plurality of trim clips are mounted on the integral support member.

Advantageously, the trim element can include at least one additional integral support member, wherein the or each additional integral support member is connected to the panel and is configured for pivoting movement with respect to the panel, said integral support member being pivotable to a second position where it covers a portion of the inner side of the panel, and includes a trim clip. Advantageously, the or each additional integral support member can be arranged according to any configuration of the integral support element described herein. Each additional integral support member can have its own additional associated features, such as a locking element and support lugs.

Preferably, the panel is moulded such that is substantially rigid; but has some degree of flexibility. The trim element can be moulded from any suitable plastics material, such as polypropylene.

In some embodiments, the trim element is arranged for use within a vehicle passenger cabin. In preferred embodiments, the trim element comprises a C - D pillar trim element. However by moulding the trim element into an appropriate size and shape, the trim element can be used in other parts of the vehicle. For example, the trim element can be used as a dashboard trim panel, door trim panel, or on the edge of a door sill. The trim element can be used in an exterior part of the vehicle, for example to fit in and around a bumper part of a car.

According to another aspect of the invention there is provided a vehicle, such as a motor car, van, lorry, or rail vehicle, including a trim element according to any one of the preceding claims.

According to another aspect of the invention there is provided a method of installing a trim element on a vehicle, including providing a trim element according to any configuration described herein, pivoting the integral support member to a second position where it covers a portion of the inner side of the panel, and inserting each trim clip into respective holes formed in the vehicle, thereby securing the trim element to the vehicle.

Advantageously, the method includes locking the integral support member in the second position, and preferably releasably locking the integral support member in the second position.

Advantageously, the method includes releasably attaching the trim clip to the integral support member.

An embodiment of the invention will now be described by way of example only with reference to the accompanying drawings, in which:
Figure 1a is an isometric view of a prior art trim element, which is mounted over part of the "C" and "D" pillars of a motor vehicle;
Figure 1b is an isometric view of part of the trim element of Figure 1a in a distorted condition, wherein a lower rear corner of the trim element has bowed away from the vehicle structure;
Figure 2 is an isometric view of an inner side of part of a trim element in accordance with the current invention, showing a pivotable trim clip support member in a second (locked) position (without a trim clip);
Figure 3 is an enlarged view of part of the trim element of Figure 2, showing the support member in more detail (without a trim clip);
Figure 4 is a sectional view of the support member shown in Figure 2 along a longitudinal centre line (X-X in Figure 2) when the support member is in a first (non-locked, substantially as moulded) position;
Figure 5 is a similar isometric view to that of Figure 2, showing a trim clip releasably mounted on the support member;
Figure 6 is an enlarged view of part of the trim element of Figure 5, showing the support member, with trim clip, in more detail;
Figure 7 is a sectional view of the support member, with trim clip, shown in

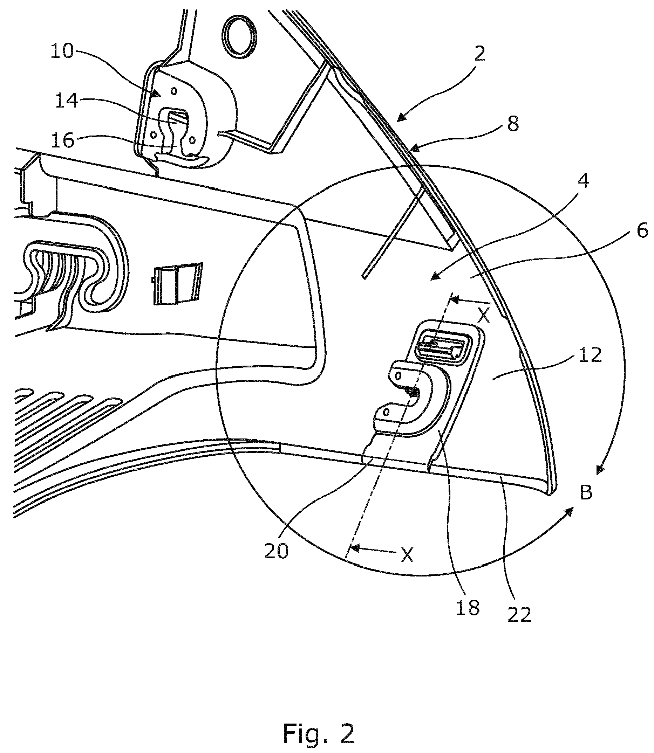

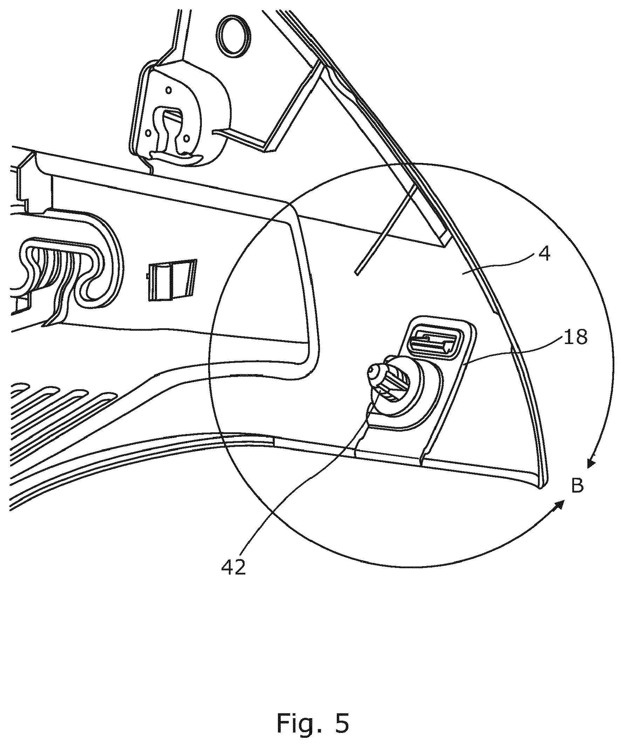

Figure 5 along a longitudinal centre line (X-X in Figure 2) when in the second position;

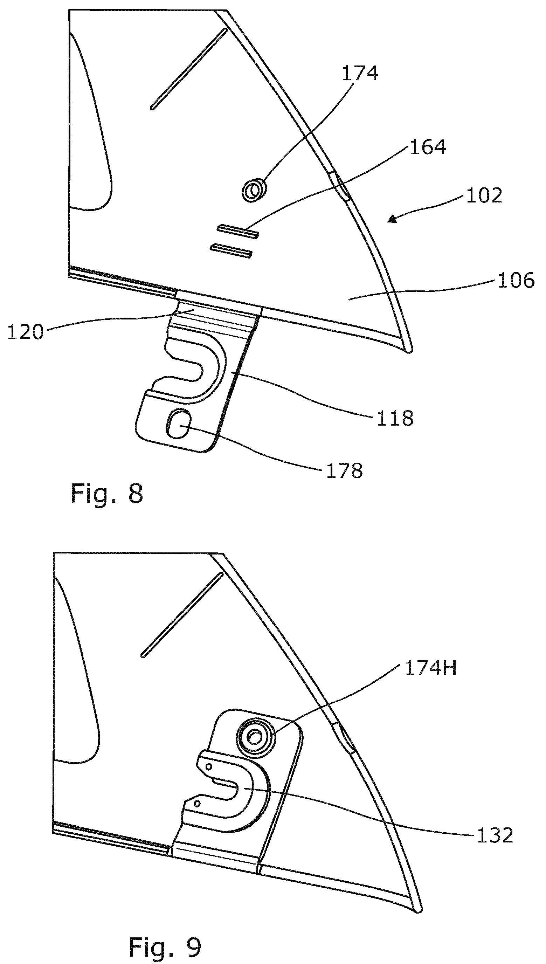

Figure 8 is an enlarged view of part of the trim element of Figure 2, showing the support member in a first position, with an alternative means of locking the support member in the second position, by heat staking; and

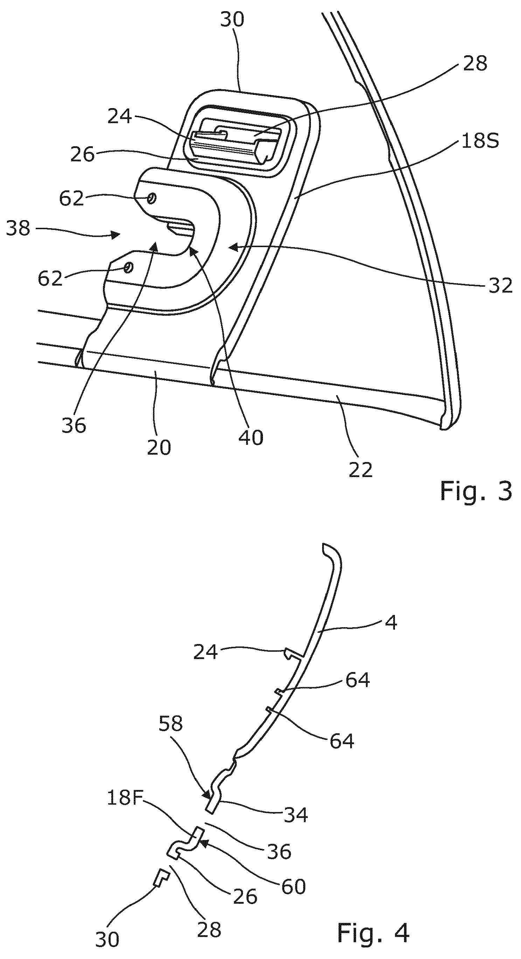

Figure 9 is a view similar to Figure 3, showing the support member secured in its second position by heat staking.

A part of a trim element 2 in accordance with the invention, and corresponding to trim element 1 in the prior art, is shown in Figures 2 to 7. The trim element 2 is arranged for attachment to two roof pillars (5, 7, Fig. 1) of a motor vehicle, which are commonly referred to as the "C" and "D" pillars; the "C" pillar being located aft of the rear passenger door, and the "D" pillar being located adjacent to the trunk door or tailgate.

The trim element 2 is a moulded component made of a suitable plastics material, for example polypropylene or ABS, that is formed by any suitable moulding process, for example injection moulding. The trim element 2 includes a panel 4 having an inner side 6 that *in-situ* faces towards a supporting structure of the vehicle (in this case, the roof pillars 5, 7 and the structure located there between); and an outer side 8 that *in-situ* faces into the interior of the vehicle. When *in*-*situ*, the inner side is hidden from view; and the outer side is exposed to view. The outer side 8 generally carries a decorative finish and is conventionally referred to as the "A" surface; whereas the inner side 6 may include marks formed by moulding injection points, and is conventionally termed the "B" surface.

Several trim clip support mountings 10 are provided on the inner face 6 of the trim panel 4 (for clarity, only one mounting is shown in the Figures). The number of mountings 10, and hence the number of trim clips, is determined by the application. The support mountings 10 are formed as integral moulded parts of the trim element 2. Each support mounting 10 protrudes from an inner surface 12 of the panel and includes a cavity 14 and a slot 16. Each support mounting 10 is arranged to receive a trim clip (not shown). The trim clip is mounted on the support mounting 10 by sliding a base part into the cavity 14 via the slot 16. The trim clips are used to attach the trim element 2 to the vehicle structure. A part of the trim clip that protrudes outwards from the mounting 10 (see Figures 5 to 7) is inserted into a hole formed in the vehicle structure, thereby securing the trim element 2 to the vehicle. The support mountings 10 are distributed over the inner side 6 of the panel; typically in peripheral portions, so as to support the edges of the panel.

The trim element 2 also includes a trim clip support member 18. The support member comprises an integral moulded part of the panel. The support member 18 is connected to the panel 4 by an integral live hinge 20, which in this case is located on a lower edge 22 of the panel towards a rear corner, where in the prior art trim element (1, Fig. 1), no trim clip was included. The live hinge 20 is connected to one end of the support member. The support member is elongate; and the live hinge 20 is arranged substantially perpendicular to a longitudinal axis (X-X, Fig. 2) of the support member. The live hinge 20 comprises a web of the plastics material, which is of reduced thickness so that it allows the support member 18 to pivot with respect to the panel 4. In Figures 2, 3 and 5 to 7, the support member 18 is shown in a second position 18S, where it is folded over a portion of the inner surface 12 and is locked in position by a locking element 24 (Fig. 3), which is in the form of a resilient latch. Thus the support member covers a portion of the inner surface 12, in the sense that it overlies a portion of the inner surface 12, whether or not it contacts the surface 12. The purpose of this arrangement is that the support member 18 is not visible when the trim element 2 is located *in*-*situ*.

The latch 24 is located on the inner side 6 of the panel, and holds the support member 18 in place by engaging a locking formation (26, Fig. 3), such as an edge portion of the support member. In the arrangement shown in Figures 2 to 4, the support member includes a formation 28, in the form of an aperture, for receiving the locking element 24. When the support member 18 is moved to the second position, the latch engages an edge of the support member that defines the aperture. Of course, the latch can be arranged to engage any other edge portion of the support member, such as edge portion 30.

The resilient latch is releasable, thereby enabling the support member to pivot to a first (non-locked) position, wherein the support member 18 is free to pivot relative to the panel 4, about the live hinge 20. The support member 18 is inherently biased towards the first position by the live hinge 20. Figure 4 shows the support member 18 in the first position 18F. When the trim element is manufactured, the support member 18 is formed in the first position.

The support member 18 includes a trim clip mounting 32 (Fig. 3). The mounting 32 is arranged to face towards the vehicle structure when the support member 18 is in the second position. The mounting 32 comprises a raised portion (34, Fig. 4) in the support member structure, and a slot 36. The slot 36 is open at a first side 38; and is closed at a second side 40. The width of the slot at the open side 38 is greater than at the closed side 40. The slot 36 extends transversely across a portion of the support member 18. The slot 36 is arranged substantially parallel with the live hinge 20.

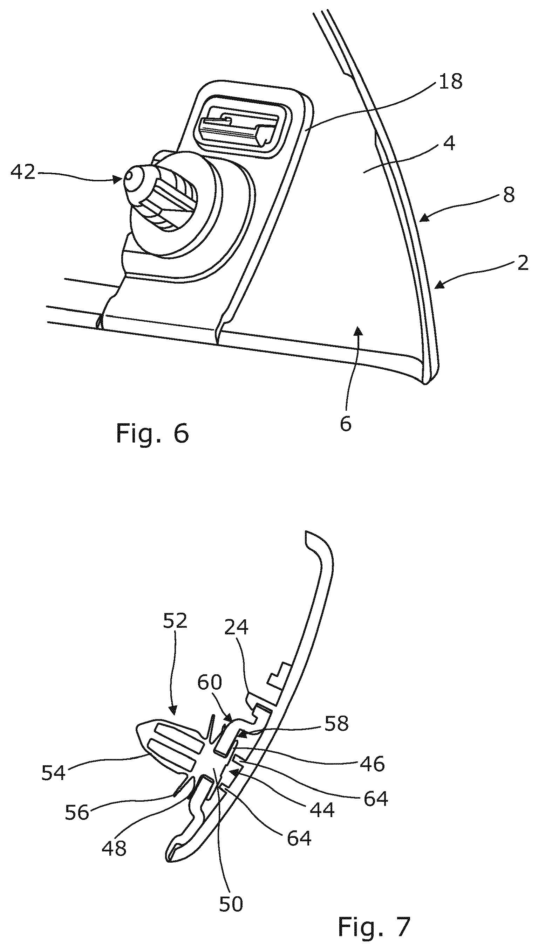

A trim clip 42 is releasably attached to the support member 18 via the mounting 32 (see Figures 5 to 7). The trim clip 42 comprises a moulded plastics element. The trim clip 42 includes a mounting part 44 (Fig. 7) having first and second flanges 46, 48 and a stem 50; and a vehicle gripping part 52, having a resilient shaft 54 and a third flange 56. The trim clip 42 is releasably attached to the support member 18 by inserting the mounting part 44 into the slot 36 (Fig. 3) such that the first flange 46 is located on a first side 58 of the support member (Fig. 7) and the second flange 48 is located on the second side 60 of the support member 18. The gripping part 52 protrudes substantially perpendicularly from the second side 60 of the support member, which faces the vehicle structure when *in*-*situ*. When mounted to the vehicle, the resilient shaft 54 is inserted into a hole formed in the vehicle structure (not shown).

The trim clip mounting 32 (Fig. 3) includes protrusions 62 that are arranged to engage at least one of the first and second flanges 46, 48 to improve retention of the trim clip 42 in the slot 36.

Lugs 64 (Figs. 4 and 7) are formed on the inner side 6 of the panel, and are provided to engage and support the trim clip 42 when the support member is in its second position (Fig. 7), and the trim element 2 is attached to the vehicle structure. The lugs 64 engage the first flange 46, and the support member 18 flexes due to the loads applied. Essentially, the lugs 64 help to ensure that the support member 18 does not bend or deform significantly during attachment.

The trim clips 42 are releasably attachable to the trim element 2 in order to allow the trim element to be removed and reattached to the vehicle a plurality of times, typically at least four times, without the trim element failing. If any of the trim clips should fail during this period they can be replaced at relatively low cost, compared with replacement of the entire trim element.

It will be appreciated by the skilled person that it may be desirable in some circumstances to include one or more trim clips that are formed integrally with the trim element.

An alternative means of locking the support member in place in its second position is shown in Figures 8 and 9. In order to differentiate this embodiment from the previously described embodiment, numerals increased by 100 or 150 have been used.

A trim element 102 comprises an inner side or "B" surface 106. A trim clip support member 118 is moulded onto trim element 102, and connected thereto by a live hinge 120. Lugs 164 correspond to lugs 64 in the previous embodiment, but locking means 24 is replaced by tubular element 174. As the support member 118 is rotated from its first position as moulded, shown in Figure 8, to its second position as shown in Figure 9, tubular element 174 passes through aperture 178, and initially projects therethrough. Tubular element 174 is then heat staked onto support member 118, as shown in Figure 9. The process of heat staking is well known to automotive trim engineers, and will not be described further. The heat staked element comprising a flattened head part 174H fastens support member 118 to trim element 102 permanently. A trim clip 42 may then be fitted to mounting 132, as described previously.

Although the present invention has been described in connection with specific preferred embodiments, it should be understood that the invention as claimed should not be unduly limited to such specific embodiments. Furthermore, it will be apparent to the skilled person that modifications can be made to the above embodiment that fall within the scope of the invention, for example, the trim element may be sized and shaped for fitment to other parts of the vehicle. For example, the trim panel can be fitted to other roof pillars, a door, part of a sill, part of a dashboard; or can be an external trim element, for example can be fitted adjacent to a bumper. The panel may take any shape and size, according to its intended location.

The locking element can be formed on the support member and a locking formation can be located on the panel 4.

More than one trim clip can be mounted on the support member.

The trim element can include a plurality of integral support members, wherein each support member is pivotally attached to the panel, and includes a trim clip mounting formation.

## Claims

1. A trim element (2, 102) for a vehicle (3), the trim element comprising:
(a) a moulded panel (4) having an inner side (6, 106) and an outer side (8);
(b) at least one integral support member (18, 118) connected to the panel (4) and configured for pivoting movement with respect to the panel, said support member (18, 118) being pivotable from a first position (18F) as moulded to a second position (18S) where it covers a portion of the inner side (6, 106) of the panel (4); and
(c) at least one trim clip (42) on the support member (18, 118) for attaching the trim element (2, 102) to the vehicle structure.

2. A trim element (2, 102) according to claim 1, wherein the trim clip (42) is releasably attachable to the integral support member (18, 118).

3. A trim element (2, 102) according to claim 1 or claim 2, wherein the integral support member (18, 118) includes at least one trim clip mounting formation (32, 132).

4. A trim element (2, 102) according to claim 3, wherein the mounting formation (32, 132) includes a receiving formation therein, and the trim clip (42) is mounted in the receiving formation.

5. A trim element (2, 102) according to claim 4 when dependent on claim 2, wherein the receiving formation includes a slot (36) that is open at one side (38) and the trim clip (42) is insertable and/or removable from the mounting formation (32, 132) via the open side of the slot.

6. A trim element (2, 102) according to any one of the preceding claims, including at least one additional trim clip (42), wherein the additional trim clip is releasably attachable to the panel (4).

7. A trim element (2, 102) according to any one of the preceding claims, including a locking element (24, 174H) arranged to retain the integral support member (18, 118) in the second position (18S).

8. A trim element (102) according to claim 7, wherein the locking element (174H) permanently fixes the integral support member (118) in the second position (18S).

9. A trim element (2, 102) according to any one of the preceding claims, including at least one support formation (64, 164) provided on the inner side (6, 106) of the panel (4), wherein the or each support formation is arranged to support a trim clip (42) mounted on the integral support member (18, 118) when the integral support member is in the second position (18S).

10. A trim element (2, 102) according to any one of the preceding claims, wherein the integral support member (18, 118) is connected to the trim panel (4) by a live hinge (20, 120).

11. A trim element (2, 102) according to claim 10, wherein the integral support member (18, 118) is hinged to a peripheral portion, such as an edge (22) or side wall, of the trim panel (4), and preferably towards one corner of the trim panel.

12. A trim element (2, 102) according to any one of the preceding claims, arranged for use within a vehicle cabin.

13. A trim element (2, 102) according to any one of the preceding claims, wherein the trim element comprises a C - D pillar (5, 7) trim element.

14. A vehicle (3) including a trim element (2, 102) according to any one of the preceding claims.

15. A method of installing a trim element (2, 102) on a vehicle (3), including providing a trim element (2, 102) according to any one of claims 1 to 13, pivoting the integral support member (18, 118) to a second position (18S) where it covers a portion of the inner side (6, 106) of the panel (4), and inserting each trim clip (42) into respective holes formed in the vehicle (3), thereby securing the trim element (2, 102) to the vehicle.
